# EUROPEAN PATENT APPLICATION

(11) **EP 2 159 416 A2**
(43) Date of publication of application: **03.03.2010**
(21) Application number: 09167791.4
(22) Date of filing: 13.08.2009
(51) Int. Cl.: F03D 7/02, F03D 7/04

(54) **Wind tracking system of a wind turbine**

(30) Priority: 27.08.2008 US 199019
(71) Applicant: General Electric Company, Schenectady, NY 12345 (US)
(72) Inventor: Hoffmann, Till, 49078, Osnabrück (DE)
(74) Representative: Bedford, Grant Richard

(57) **Abstract**

The present patent application concerns a wind turbine 100 having a hub 130 and at least one rotor blade 140 connected to the hub, wherein the hub and the at least one rotor blade form a wind rotor that is rotatable about a rotor axis X for converting kinetic energy of the wind into another form of energy and rotatable about a yaw axis Y for changing the yaw of the wind rotor, wherein the wind turbine further comprises at least one sensing device 210 for sensing a yaw moment of the wind rotor and wherein the wind turbine 100 is adapted to control the yaw of the wind rotor depending on a signal of the sensor 210.

## Description

The present disclosure relates generally to a wind turbine having a hub and at least one rotor blade connected to the hub. Further it relates to a controller for a wind turbine and a method for controlling a yaw angle of a wind turbine.

The measurement of the relative angle between a rotor and a wind direction or a wind stream with a nacelle mounted measurement device is prone to errors. The influence of turbulences caused by the rotor is disturbing the wind vanes and therefore leading to an error in a yaw alignment. Also, the wind direction is only measured locally in the height of the nacelle. It is currently not possible to measure a collective angle representing the resulting relative yaw angle integrated over the complete rotor surface.

In view of the above, a wind turbine including a hub and at least one rotor blade connected to the hub is provided, the hub and the at least one rotor blade forming a wind rotor that is rotatable about a rotor axis that converts kinetic energy of the wind into another form of energy and rotatable about a yaw axis that changes the yaw of the wind rotor, the wind turbine further comprising at least one sensing device that senses a yaw moment of the wind rotor and the wind turbine being adapted to control the yaw of the wind rotor depending on a signal of the sensor.

According to a further aspect, a controller for a wind turbine is provided including a hub and at least one rotor blade connected to the hub, the hub and the at least one rotor blade forming a wind rotor that is rotatable about a rotor axis that converts kinetic energy of the wind into another form of energy, the wind rotor being rotatable about a yaw axis that changes the yaw of the wind rotor, the controller being adapted to control a yaw depending on a signal of a sensing device sensing a yaw moment of the wind rotor.

According to a further aspect, a method that controls a yaw angle of a wind turbine is provided, the wind turbine including a hub and at least one rotor blade connected to the hub, the hub and the at least one rotor blade forming a wind rotor that is rotatable about a rotor axis that converts kinetic energy of the wind into another form of energy, the wind rotor being rotatable about a yaw axis for changing the yaw of the wind rotor, the method comprising: sensing a yaw moment; and controlling the yaw depending on the yaw moment.

Various aspects, advantages and features are apparent from the dependent claims, the description and the accompanying drawings.

A full and enabling disclosure, including the preferred mode thereof, to one of ordinary skill in the art, is set forth more particularly in the remainder of the specification, including reference to the accompanying figures wherein:
Fig. 1 shows a schematic drawing of a wind turbine;
Fig. 2 shows a schematic top view of the wind turbine;
Fig. 3 shows a perspective view of the wind rotor of the wind turbine;
Fig. 4 shows a schematic graph of measured torsional moments;
Fig. 5 shows a further schematic graph of measured torsional moments;
Fig. 6 shows a schematic yaw control system of a wind turbine; and
Fig. 7 shows a flow chart of a method for controlling a wind turbine.

Reference will now be made in detail to the various embodiments, one or more examples of which are illustrated in the figures. Each example is provided by way of explanation, and is not meant as a limitation. For example, features illustrated or described as part of one embodiment can be used on or in conjunction with other embodiments to yield yet a further embodiment. It is intended that the present disclosure includes such modifications and variations.

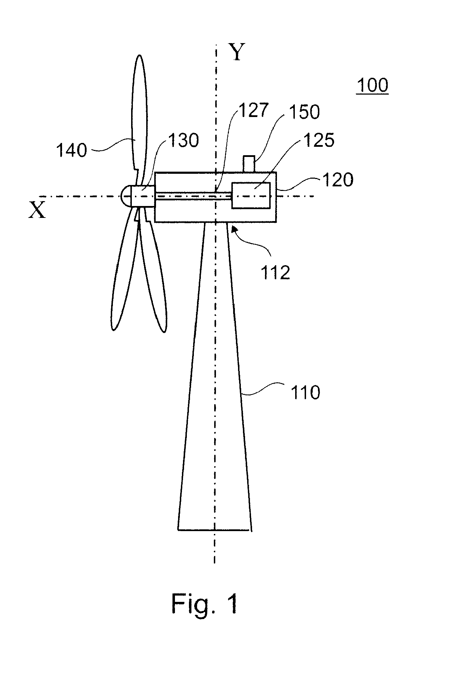

Fig. 1 shows a schematic drawing of a wind turbine 100. The wind turbine 100 includes a tower 110 onto which a nacelle 120 is arranged. The nacelle 120 is rotatable about a yaw axis Y. The yaw axis Y is substantial vertical in an embodiment. Within the nacelle 120 a generator 125 for transforming a rotational energy into electrical energy is placed. A hub 130 is connected with a rotor shaft 127 to the generator. In further embodiments of wind turbines the hub 130 may be connected to the generator 125 via a rotor shaft 127 and a gearbox (not shown). The hub is rotatable about a rotor axis X that is substantial horizontal in an embodiment. Three rotor blades 140 are connected to the hub 130. The rotor blades 140 and the hub 130 are forming a wind rotor of the wind turbine 100. In a typical situation, the nacelle 120 is rotated about the yaw axis Y such that the rotor axis X of the hub 130 is substantially parallel to a wind direction. The wind turbine 100 works as follows. The wind is imparting a torque on the wind rotor due to a profiled section of the rotor blades 140. Therefore, the wind rotor is rotating about its rotor axis X. The wind rotor is then driving via the rotor shaft 127 the generator 125. The generator 125 is transforming the rotation into an electrical current. Hence, the kinetic energy of the wind is transformed into electrical energy.

The yaw of the wind turbine 100 is in the depicted embodiment of Fig. 1 an angular position about the yaw axis Y of the nacelle 120. Generally, horizontal-axis wind turbines have the rotor shaft 127 and electric generator 125 at the top of a tower, and are pointed into the wind W.

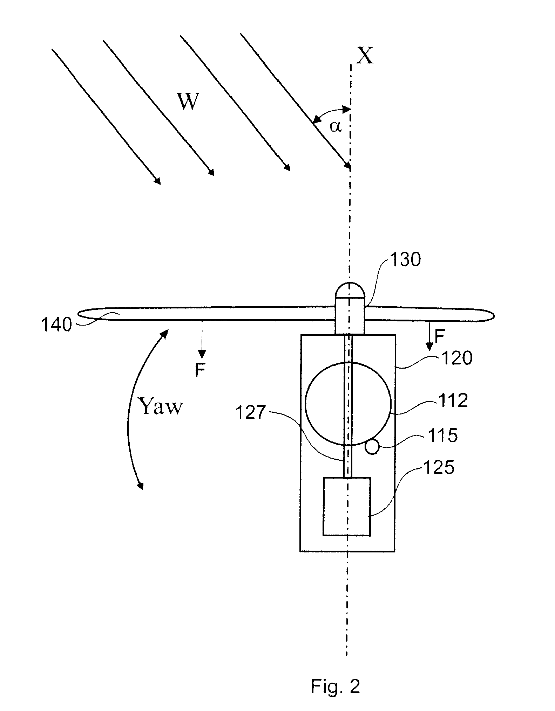

In Fig. 2 a top view of a wind turbine is shown. The same elements are numbered with the same reference numbers as in Fig. 1. The nacelle 120 is arranged with a yaw bearing 112 on the tower 110. The yaw bearing 112 is adapted to allow the nacelle 120 and therefore also the wind rotor to rotate about the yaw axis Y. A yaw drive 115, also called azimuth drive, rotates the nacelle 120 relative to the tower 110. The wind turbine 110 may use a hydraulic and/or an electrical yaw drive 115. In the case of an electrical yaw drive often at least one electric motor is used.

A yaw angle α is called the deviation of the rotor axis X from a wind direction W (see Fig. 2). A substantial yaw angle α may cause a loss of power. If the rotor should fully capture the kinetic energy of the wind, the wind rotor should be oriented correctly to the wind direction. That means that the yaw angle α should be about 0° degrees. Typically, a motor-driven yaw system of the nacelle, e.g. the azimuth or yaw drive, has the task of reducing the yaw angle or automatically orienting the wind rotor into the wind W. Some components of a yaw system may be located in the nacelle whereas other parts of the yaw system may be located in the tower 110.

To determine the yaw angle α, typically a wind vane is used (see Fig. 1). The yaw drive 115 drives then the nacelle and therefore the wind rotor into the wind W. In an embodiment the yaw drive 115 maintains the nacelle in the yaw position determined using the information about the wind direction W. Further, in another embodiment in order to avoid the situation of the drive motors having to maintain a yaw moment after a completed yawing, a yaw brake may be used.

But, generally the wind vane is placed behind the rotor. Thus, the wind is strongly perturbed due to the rotation of the rotor and the passing of the rotor blades. 140.

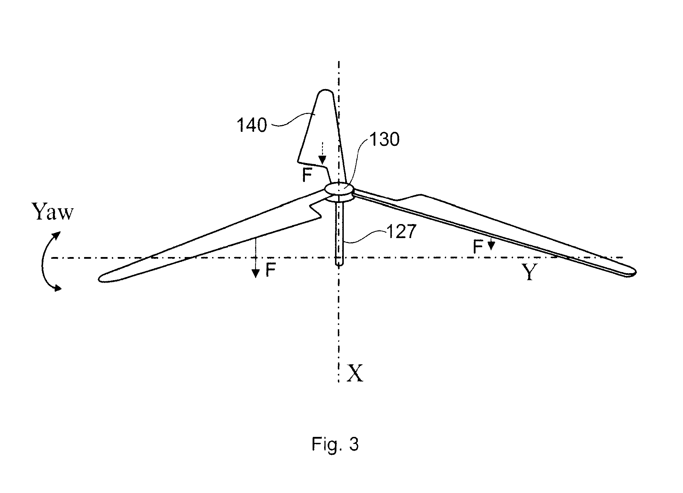

Fig. 3 shows a perspective view of the wind rotor. For the sake of simplicity only the rotor and the rotor shaft 127 are shown. The tower 110 may be placed on the left side of the rotor shaft 127 such that the view of Fig. 3 corresponds to the wind direction W of Fig. 2. The wind impinges the wind rotor and forces the rotor to rotate. Thus, a relative wind direction impinges on each rotor blade 140. In detail, the relative wind on each rotor blade 140 is combined the wind W and a relative air stream due to the rotation of the rotor blade 140. Therefore, the relative wind for each blade and even for each blade segment is different. The relative wind direction cause a tangential force that provokes the rotation of the rotor and an axial force F (thrust). The arrows depicted in Figs. 2 and 3 show only the direction of the axial force F and not a value of the force. In each position of the wind rotor, the axial force F on the rotor blade 140 is different. The axial force F depends not only on the yaw angle α, but also on the rotational speed of the rotor, the wind speed of wind W, a pitch angle of each rotor blade 140, a form of the rotor blade, a rotational position of the rotor blade and/or a wind shear. The wind shear may depend on the place where the wind turbine is erected (the roughness of the surface), in which height the rotor and/or the hub have been installed and on the wind speed.

The axial forces F on the rotor blades 140 create a torsional moment in particular around the yaw axis Y. If, for a certain given time substantially all torsional moments of the blades around the yaw are added, a resulting torsional moment M comes out. This resulting torsional M moment depend on the yaw angle α and may also depend on the rotational speed of the wind rotor, a pitch angle of the rotor blades 140, the wind speed of wind W, the rotational position of the rotor blades 140. As all parameters with exception of the yaw angle α are known, the yaw angle α may be deducted from the resulting torsional moment M.

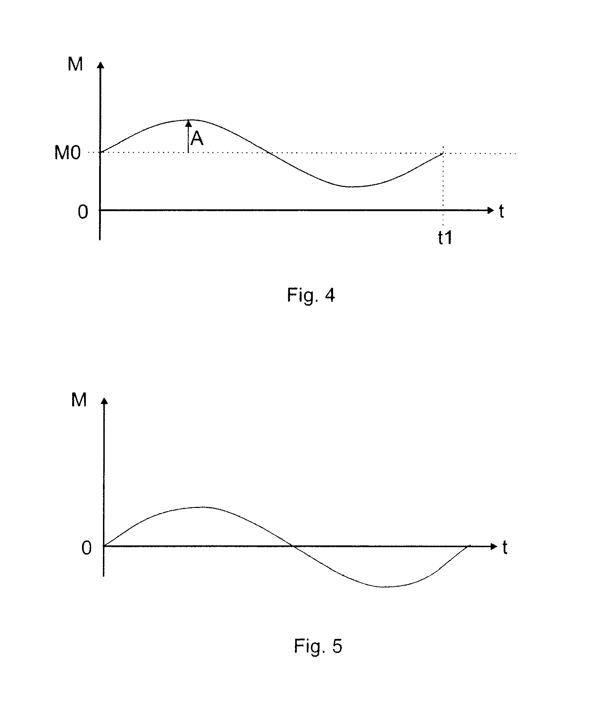

In Fig. 4 a resulting torsional moment M is shown in a simplified graph. A period, and thus the time t1, corresponds to the time of a complete revolution of the rotor. As shown, the resulting torsional moment M may vary during a complete revolution around a certain value M0. The amplitude A of the variation around M0 may depend on the wind strength, the form of the rotor blades 140, the pitch angle and/or the rotational speed. As M0 is not close to zero, it may be deducted that the wind turbine is not perfectly aligned in the wind direction and thus do not capture the maximum of energy out of the wind. The value M0 depends among other known values, e.g. the wind strength, the form of the rotors blades, the pitch angle and/or the rotational speed, on the yaw angle α as unknown value. The other values listed above are known values. To get an average value Mᵢₙₜ of M an integral of M about on period, i.e. the time of a complete revolution of the rotor (t1) may be calculated. If necessary, the value M may be also integrated about several revolution of the rotor. In a further embodiment a mean value Mₘₑₐₙ may be calculated about one or more periods to get M0.

If the nacelle and therefore the wind rotor are optimally aligned with the wind direction W, i.e. the yaw angle α is close to zero, the resulting torsional moment M varies more or less around zero (see Fig. 5). Thus, an integration about a period or several periods of the resulting torsional moment M, i.e. one or several revolutions of the rotor, or a calculation of a mean value would lead to a value close to zero.

As the resulting torsional moment M depends not only on the yaw angle α but also on other values, in an specific embodiment the yaw angle α may be calculated from the average or mean value of the resulting torsional moment. Then, the yaw drive may be activated to reduce the yaw angle α**.** The calculation of the yaw angle α may, in a further embodiment, not be necessary as the Mᵢₙₜ or M_{Mean} may be used as input value for control of the yaw and either the value Mᵢₙₜ or Mₘₑₐₙ may be close to zero in an optimal alignment of the rotor to the wind. In an embodiment, the yaw drive of the wind turbine may be controlled for example with a proportional (P) controller, a proportional-integral (PI) controller or simply look-up table controls with either the yaw angle α, Mᵢₙₜ or M_{Mean} as value to control (or output value). A set point value for the P, PI or simply look-up table controls may be therefore the yaw angle α, Mᵢₙₜ or M_{Mean} equal to zero.

The resulting torsional moment M around the yaw axis Y may be measured at the yaw bearing 112, e.g. using strain gauge, or less preferably using another sensor known in the art, such as, for example, a piezoelectric device. In another embodiment the resulting torsional moment M may be measured using the forces acting on the yaw drive 115. This may be done, in case of a electric yaw motor in measuring the armature current of the motor that is depending on the resulting torsional moment M, if no brakes are used for fixing the yaw of the wind turbine 100. In a further embodiment, one or more strain gauges may be placed on the rotor shaft 127 for measuring a bending moment on the rotor shaft 127. In another embodiment, the torsional moment on the tower 110 may be measured to deduce the resulting torsional moment M. In further embodiment, a proximity sensor at the rotor shaft 127 may be used to determine the resulting torsional moment M. In another embodiment, strain gauge equipped bolts in a hub-rotor shaft connection may be used. In a further embodiment, strain gauges in the blade roots may be used for measuring the torsional moment of a rotor blade 140. The measurement results may be further treated by a controller for determining the resulting torsional moment M. The yawing moment may be also used to reduce the loads on the different components like the rotor shaft and the hub by adding interdependent or independent pitch offsets to each rotor blade 140. In an typical embodiment also one or more of the cited measurement methods may be used to determine the resulting torsional moment M.

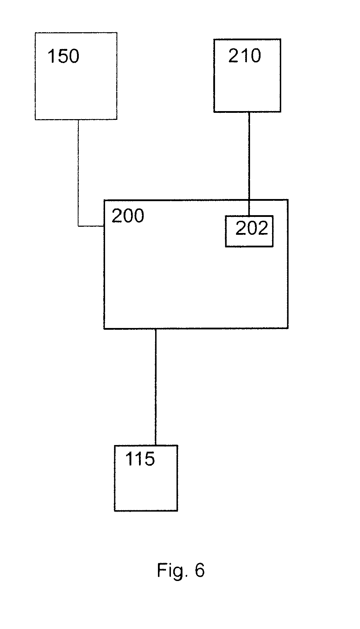

Fig. 6 shows a yaw control system with a controller 200 for the yaw of the wind turbine 100. The controller 200 may be connected to a classical anemometry 150 for determining a general yaw angle. Further, the controller 200 is connected to a sensing device 210 for sensing the present resulting yaw moment M of the wind turbine. This may be one or more sensors of the ones described here-above. In a further embodiment, one or several sensing devices are connected to the controller 200, and the controller 200 is computing from the sensed values the resulting yaw moment M of the rotor. For example, the sensing device may be sensing the armature current of the yaw drive motor 115. Depending on the resulting yaw moment M, the controller may regulate the yaw of the wind turbine 100.

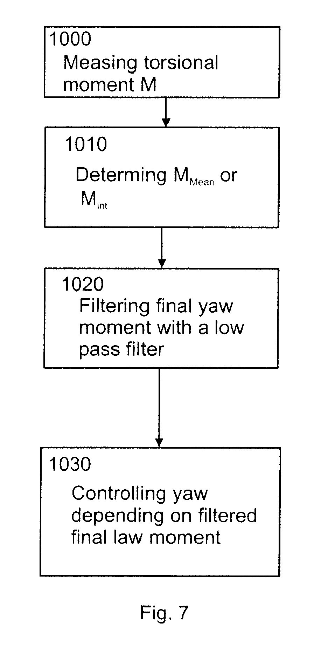

In Fig. 7 a flow chart for controlling the yaw of the wind turbine 100 is shown. First (step 1000), as already described a torsional moment M is measured using for example the measurement methods explained hereabove. In a next step (step 1010), as already with respect to Figs. 4 and 5, a mean or average torsional Moment Mᵢₙₜ or M_{Mean} is calculated. To avoid a too fast regulation of the yaw, and therefore of the yaw angle α, the final yaw moments that are continuously calculated by the controller 200 are low pass filtered. If a low pass filter 202 is used, the step 1010 of calculation of a mean or average torsional moment Mᵢₙₜ or Mₘₑₐₙ is not necessary, as the low pass filter 202 would cut off of the oscillations of the resulting torsional moment M. The cutoff frequency of the low pass filter 202 may be chosen arbitrary, but may have a high time constant. For example the cutoff frequency may be 5.5 x 10⁻³ Hz, more specifically 8.3x10⁻³ Hz. These frequency values correspond to a duration of approximately 3 minutes or 2 minutes, respectively. A low pass filter is used to avoid a yaw adjustment at every squall or gust of wind with a different direction than the generally predominant wind direction W. After the filtering of the final yaw moment, the resulting value may be checked for plausibility.

The filtered final yaw moment is then used to control the yaw of the wind turbine. This may be done with a known control algorithm, e.g. closed loop controller, a P, PI or simply look-up table controls. In that case, the setpoint value may be a resulting torsional moment M equal to zero for P, PI or simply look-up table controls. Or it may be done with a simple comparison of the filtered final yaw moment with a predetermined value that may depend on the wind strength. For example the predetermined value may be 3°. Thus, if the yaw angle remains below 3 degrees, the yaw system and thus the yaw drive 115 may not be activated. If the determined yaw angle α is above 3 degrees the yaw system may turn the nacelle about the yaw axis Y with a predetermined angle, in particular directly into the wind.

In a further embodiment, the wind turbine uses the nacelle anemometry 150 to roughly drive the nacelle into the wind. In operation of the wind turbine, i.e. when the rotor of the wind turbine is rotating, the measurement of the yawing moment will represent a yaw angle error α. Having a perfectly aligned rotor, the yawing moment is near zero and will only show the moment resulting from an in-plane force perpendicular to the wind and parallel to the ground that is caused by the wind shear. This in plane force is relatively small and may be neglected. The measurement of a bending moment in yawing direction is used to fine tune the yaw position in a typical embodiment. Therefore, the actual bending moment has to be filtered with a high time constant. The resulting filtered moment has to be checked for plausibility and then used to fine-tune the yaw position. A fine-tune routing would override the yaw alignment routines using the anemometry 150 when the turbine is operating.

Thus, the measured bending moment signals could be used as addition to the nacelle anemometry or as a replacement of the nacelle anemometry when the turbine is in operation.

Further, using a yaw adjustment method as described here-above, the accuracy of the yaw position is more accurate and thus the power capture of the wind turbine is increased.

This written description uses examples to disclose the invention, including the preferred mode, and also to enable any person skilled in the art to make and use the invention. While various specific embodiments have been described, those skilled in the art will recognize that the invention can be practiced with modification within the spirit and scope of the claims. Especially, mutually non-exclusive features of the embodiments described above may be combined with each other. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiment of the present invention are defined by the following numbered clauses:
1. A wind turbine comprising a hub and at least one rotor blade connected to the hub, the hub and the at least one rotor blade forming a wind rotor that is rotatable about a rotor axis for converting kinetic energy of the wind into another form of energy and rotatable about a yaw axis for changing the yaw of the wind rotor, the wind turbine further comprising at least one sensing device that senses a yaw moment of the wind rotor and the wind turbine being adapted to control the yaw of the wind rotor depending on a signal of the sensor.
2. The wind turbine according to clause 1, wherein wind turbine comprises a tower, the wind rotor being arranged on the tower, wherein the sensor is adapted to sense a bending moment of the tower.
3. The wind turbine according to any preceding clause, wherein the yaw axis is substantially vertical.
4. The wind turbine according to any preceding clause, wherein the rotor axis is substantially horizontal.
5. The wind turbine according to any preceding clause, wherein the wind turbine comprise a rotor shaft, the wind rotor being connected to the rotor shaft for rotating the rotor shaft about the rotor axis, wherein the sensor is adapted to sense a bending moment of the rotor shaft in yaw direction.
6. The wind turbine according to any preceding clause, wherein the wind turbine comprise a yaw drive for rotating the wind rotor about the yaw axis, wherein the sensing device is adapted to sense the torque imparted by the rotor on the yaw drive.
7. The wind turbine according to any preceding clause, wherein the yaw drive is an electric motor.
8. The wind turbine according to any preceding clause, wherein the sensing device is an ammeter measuring the armature current of the motor.
9. A controller for a wind turbine comprising a hub and at least one rotor blade connected to the hub, the hub and the at least one rotor blade forming a wind rotor that is rotatable about a rotor axis for converting kinetic energy of the wind into another form of energy, the wind rotor being rotatable about a yaw axis for changing the yaw of the wind rotor, and the controller being adapted to control a yaw depending on a signal of a sensing device sensing a yaw moment of the wind rotor.
10. The controller according to clause 9, further comprising a low pass filter adapted to filter the signal of the sensing device.
11. The controller according to clause 9 or 10, wherein the low pass filter has a cutoff frequency of less than about 8.3x10⁻³ Hz.
12. The controller according to any of clauses 9 to 11, further adapted to change the yaw of the wind rotor if the filtered yaw moment exceeds a predetermined value.
13. The controller according to any of clauses 9 to 12, wherein the controller is a PID or PI controller.
14. A method that controls a yaw angle of a wind turbine, the wind turbine comprising a hub and at least one rotor blade connected to the hub, the hub and the at least one rotor blade forming a wind rotor that is rotatable about a rotor axis that converts kinetic energy of the wind into another form of energy, the wind rotor being rotatable about a yaw axis that changes the yaw of the wind rotor, the method comprising:
   sensing a yaw moment; and
   controlling the yaw depending on the yaw moment.
15. The method according to clause 14, wherein the sensed values of the yawing moment is low pass filtered.
16. The method according to clause 14 or 15, wherein the sensed values of the yawing moment is low pass filtered with a cutoff frequency of less than 8.3x10⁻³ Hz.
17. The method according to any of clauses 14 to 16, wherein the sensed value is checked for plausibility.
18. The method according to any of clauses 14 to 17, wherein the yaw of the wind rotor is controlled by a proportional control, a proportional-integral control or look-up table control method using the yaw moment as an input value.
19. The method according to any of clauses 14 to 18, wherein a setpoint value is a yaw moment or a yaw angle equal to zero.
20. The method according to any of clauses 14 to 19, wherein the yaw of the rotor is changed if the filtered yaw moment exceeds a predetermined value.
21. A wind turbine comprising:
   a sensor;
   a blade connected to a hub;
   a rotor shaft rotating about a rotor axis; and
   the sensor adapted to sense a bending moment of the rotor shaft in a yaw direction, and a control to output a signal to control at least one operational parameter of the wind turbine.

## Claims

1. A wind turbine (100) having a hub (130) and at least one rotor blade (140) connected to the hub, wherein the hub and the at least one rotor blade form a wind rotor that is rotatable about a rotor axis (X) for converting kinetic energy of the wind into another form of energy and rotatable about a yaw axis (Y) for changing the yaw of the wind rotor, wherein the wind turbine further comprises at least one sensing device (150, 210) for sensing a yaw moment of the wind rotor and wherein the wind turbine is adapted to control the yaw of the wind rotor depending on a signal of the sensor.

2. The wind turbine (100) according to claim 1, wherein the yaw axis (Y) is substantially vertical and/or the rotor axis (X) is substantially horizontal.

3. The wind turbine (100) according to claim 1 or 2, wherein the wind turbine comprise a rotor shaft (127), the rotor being connected to the rotor shaft (127) for rotating the rotor shaft about the rotor axis (X), wherein the sensor (210) is adapted to sense a bending moment of the rotor shaft in yaw direction.

4. The wind turbine (100) according to any one of the claims 1 to 3, wherein the wind turbine comprise a yaw drive (115) for rotating the wind rotor about the yaw axis (Y), wherein the sensing device (115) is adapted to sense the torque imparted by the rotor on the yaw drive.

5. The wind turbine (100) according to claim 4, wherein the yaw drive (115) is an electric motor and the sensing device is an ammeter measuring the armature current of the motor.

6. A controller (200) for a wind turbine having a hub (130) and at least one rotor blade (140) connected to the hub, wherein the hub and the at least one rotor blade form a wind rotor that is rotatable about a rotor axis (X) for converting kinetic energy of the wind into another form of energy, wherein the wind rotor is rotatable about a yaw axis (Y) for changing the yaw of the wind rotor, the controller being adapted to control a yaw depending on a signal of a sensing device (210) sensing a yaw moment of the wind rotor.

7. The controller (200) according to claim 6, further comprising a low pass filter (202) adapted to filter the signal of the sensing device.

8. A method for controlling a yaw angle of a wind turbine (100), the wind turbine having a hub (130) and at least one rotor blade (140) connected to the hub, wherein the hub and the at least one rotor blade form a wind rotor that is rotatable about a rotor axis for converting kinetic energy of the wind into another form of energy, wherein the wind rotor is rotatable about a yaw axis for changing the yaw of the wind rotor, comprising:
sensing a yaw moment; and
controlling the yaw depending on the yaw moment.

9. The method according to claim 8, wherein the sensed values of the yawing moment is low pass filtered.

10. The method according to claim 9, wherein the yaw of the wind rotor is changed if the filtered yaw moment exceeds a predetermined value.
